# FASCICULE DE BREVET EUROPEEN

(11) **EP 3 706 992 B1**
(45) Date de publication et mention de la délivrance du brevet: **12.01.2022**
(21) Numéro de dépôt: 18797161.9
(22) Date de dépôt: 05.11.2018
(51) Int. Cl.: B29D 30/54, B29D 30/00

(54) **PROCEDE DE RECHAPAGE POUR UN PNEUMATIQUE COMPRENANT UN ENSEMBLE ELECTRONIQUE**
RUNDERNEUERUNGSVERFAHREN FÜR EINEN REIFEN MIT EINER ELEKTRONISCHEN ANORDNUNG
RETREADING METHOD FOR A TYRE COMPRISING AN ELECTRONIC ASSEMBLY

(30) Priorité: 08.11.2017 FR 1771177
(43) Date de publication de la demande: 16.09.2020
(73) Titulaire: Compagnie Générale des Etablissements Michelin, 63000 Clermont-Ferrand (FR)
(72) Inventeur: MOSNIER, Thomas, 63040 Clermont-Ferrand Cedex 09 (FR); FAGOT-REVURAT, Lionel, 63040 Clermont-Ferrand Cedex 09 (FR)
(74) Mandataire: Roussy, Delphine
(86) Numéro de dépôt international: PCT/IB2018/058652
(87) Numéro de publication internationale: WO 2019/092574

(56) Documents cités:
- EP-A1- 2 777 958
- US-A- 6 030 478
- US-A1- 2006 201 241
- US-A1- 2012 204 635
- US-A1- 2014 367 026
- US-B1- 6 312 539

## Description

### DOMAINE TECHNIQUE DE L'INVENTION

La présente invention concerne un procédé et un système de rechapage pour un pneumatique comportant un ensemble électronique comprenant un patch pourvu d'un logement adapté pour loger un module électronique.

### ETAT DE LA TECHNIQUE ANTERIEURE

De manière générale, deux solutions permettant de fixer des modules électroniques de pneumatique sont connues.

La première solution consiste à intégrer un module électronique au pneumatique en le rendant définitivement fixe. Pour ce faire, le module électronique est mécaniquement et irréversiblement solidaire du pneumatique. Un tel agencement permet de fiabiliser la fixation du module, qui ne présente aucun risque de désolidarisation du pneumatique. Cette solution empêche cependant le remplacement ou la modification du module électronique. Elle n'est donc pas compatible avec les systèmes électroniques prévus pour être amovibles.

Par exemple, le document FR2870031 décrit un procédé de surveillance de pneumatique équipant un véhicule terrestre. Ce procédé est mis en oeuvre au moyen d'une unité centrale de contrôle, et de puces électroniques implantées dans les flancs du pneumatique. Les puces d'un même pneumatique portent des codes d'identification identiques ainsi que des codes respectifs représentatifs de leurs implantations sur ce pneumatique.

La seconde solution prévoit l'intégration d'un module électronique à l'aide d'un patch, souvent de matériau caoutchoutique, dans lequel le module est logé de façon amovible.

Par exemple, le document FR3028451 décrit un dispositif de fixation à la paroi interne d'un pneumatique, d'un boîtier électronique de mesure de paramètres à l'intérieur du pneumatique, le dispositif associant ledit boîtier à un réceptacle souple qui venant se fixer à ladite paroi interne par un moyen d'adhésion, est préformé pour accueillir et retenir ledit boîtier, remarquable en ce que ledit réceptacle souple forme un compartiment équipé d'une ouverture, par laquelle est introduit ledit boîtier et qui est bordée par un rebord s'étendant extérieurement et proposant une surface de contact pour le moyen d'adhésion de sorte qu'une fois le réceptacle fixé, ladite ouverture est fermée par la paroi interne sur laquelle le réceptacle est fixé. Par conséquent, une fois le réceptacle fixé à la paroi du pneumatique, le module électronique n'est amovible que si l'on décolle le réceptacle. Ce dernier doit donc être changé à chaque fois que le module électronique est extrait.

Le document EP2777958 décrit un enrobage d'élastomère comprenant une pièce en caoutchouc contenant une cavité pour tenir de manière amovible un module destiné à être utilisé pour aider le fonctionnement d'un pneumatique. La cavité est configurée avec une ouverture pour faciliter l'insertion et le retrait du module de la cavité. L'enrobage d'élastomère comprend une composition de caoutchouc non durci ou partiellement durci. Dans la plupart des modes de réalisations présentés, la fente permettant d'insérer le module électronique se situe sur le dessus de la pièce en caoutchouc. Dans cette configuration, la fermeture de la cavité n'étant pas étanche. La disposition de la fente présente des risques d'éjection du module. Une configuration avec une ouverture latérale est présentée. Toutefois, cette ouverture n'est pas refermable et le module reste exposé aux éventuels contaminants, fluides et poussières susceptibles de se trouver dans la cavité du pneumatique. Le document US 2012/204635 A1 divulgue un procédé de rechapage pour un pneumatique comprenant un ensemble électronique pourvu d'un module électronique, d'un patch fixé à une paroi interne du pneumatique, ledit patch comportant un logement adapté pour y loger une partie active du module électronique.

Les solutions révélées par l'état de la technique présentent certaines imperfections quels que soient leurs agencements. Il subsiste par conséquent un besoin pour une solution efficace permettant de fixer un module électronique à une paroi interne de pneumatique de façon amovible, tout en minimisant le risque de dommage causé au pneumatique si un module venait à se détacher de son point de fixation.

D'autre part, les patchs de fixation sont souvent montés sur des pneumatiques susceptibles de faire l'objet de rechapage. Il est donc essentiel de prévoir des moyens permettant de mettre en œuvre le rechapage malgré la présence d'éléments fragiles.

Pour pallier ces différents inconvénients, l'invention prévoit différents moyens techniques.

### EXPOSE DE L'INVENTION

Un premier objectif de l'invention consiste à prévoir un moyen pour protéger efficacement un patch lors du processus de rechapage d'un pneumatique sur lequel un patch est fixé.

Un autre objectif de l'invention consiste à prévoir un moyen de protection du patch qui soit simple à réaliser et facile à mettre en place et à retirer.

Pour ce faire, l'invention prévoit un procédé de rechapage pour un pneumatique comprenant un ensemble électronique pourvu d'un module électronique, d'un patch caoutchoutique fixé à une paroi interne du pneumatique, ledit patch comportant un logement adapté pour y loger une partie active du module électronique, ledit procédé comprenant les étapes suivantes :
- retrait du module électronique du patch servant de fixation ;
- pose d'un couvercle de protection résistant à la vulcanisation contre le patch de façon à recouvrir ce dernier ;
- pose d'une nouvelle bande de roulement sur le pneumatique ;
- vulcanisation du pneumatique avec la nouvelle bande de roulement ;
- retrait du couvercle de protection du patch ;
- réinsertion du module électronique dans le patch caoutchoutique.

La mise en place du couvercle permet de préserver le patch lors de l'étape de vulcanisation. En outre, le couvercle procure une bonne isolation thermique.

De manière avantageuse, la pose de l'élément de protection contre le patch est effectuée par clipsage dudit élément de protection sur le patch à recouvrir.

Ce mode de fixation est pratique et permet d'obtenir un maintien efficace sans risque de séparation involontaire.

L'invention prévoit également un système de rechapage pour un pneumatique comprenant un ensemble électronique pourvu d'un module électronique, d'un patch caoutchoutique fixé à une paroi interne du pneumatique, ledit patch comportant un logement adapté pour y loger une partie active du module électronique, ledit patch comportant des parois latérales externes inclinées pour former un profil externe en queue d'aronde, ledit système comprenant également un couvercle de protection du patch adapté pour recouvrir ledit patch, ledit couvercle comprenant des parois latérales internes inclinées pour former un profil interne en queue d'aronde adapté pour procurer un maintien du couvercle contre le patch.

Ce système est relativement peu coûteux, et permet de prévoir de multiples vies au pneumatique sans détérioration du patch.

De manière avantageuse, le couvercle de protection est isolant thermiquement.

Cette caractéristique permet d'éviter tout vieillissement ou détérioration prématurée du patch.

Egalement de manière avantageuse, le couvercle de protection est réalisé en silastène.

Selon un mode de réalisation avantageux, le couvercle de protection est clipsable sur le patch.

### DESCRIPTION DES FIGURES

Tous les détails de réalisation sont donnés dans la description qui suit, complétée par les figures 1a à 5, présentées uniquement à des fins d'exemples non limitatifs, et dans lesquelles:
- la figure 1a est une vue en perspective d'un exemple d'un ensemble électronique;
- la figure 1b est une vue de dessus de l'ensemble électronique de la figure 1a ;
- la figure 2 est une vue en perspective d'un exemple de module électronique ;
- la figure 3a est une vue en perspective du module électronique de la figure 2 avec une enveloppe de protection ;
- la figure 3b est une vue de dessus du module électronique de la figure 3a avec l'enveloppe de protection ;
- la figure 4a est une vue en perspective d'un exemple de patch ;
- la figure 4b est une vue de dessous du patch de la figure 4a ;
- la figure 4c est une coupe longitudinale du patch de la figure 4a afin de montrer le logement interne;
- la figure 4d est une coupe en élévation du patch de la figure 4a;
- la figure 5 est une vue en élévation de l'arrière d'un exemple de patch sur lequel est posé un couvercle de protection.

### DESCRIPTION DETAILLEE DE L'INVENTION

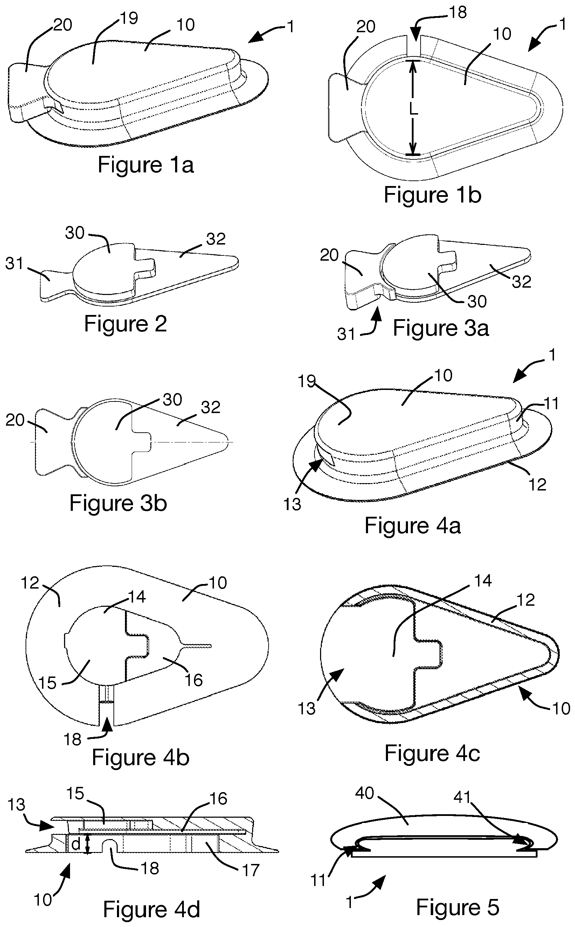

Tel qu'illustré aux figures 1a, 1b, 2, 3a et 3b, l'ensemble électronique 1 pour pneumatique est constitué d'un module électronique 30 comportant une tête de préhension 31, d'un patch caoutchoutique 10 pourvu d'un logement 14 pour insertion du module électronique 30, et d'une enveloppe de protection 20 caoutchoutique spécifiquement prévue pour recouvrir la tête de préhension 31 du module électronique 30.

Le module électronique 30 est conçu pour fournir des données d'identification du pneumatique et des données en relation avec les paramètres physiques de fonctionnement du pneumatique sur lequel l'ensemble (1) est fixé.

Tel qu'illustré aux figures 2, 3a et 3b, le module électronique 30 est sensiblement allongé, configuré selon un profil axial, orienté selon l'axe A-A. Il comporte, également orientée selon l'axe A-A, une tête de préhension 31 conçue de façon à se prolonger hors du patch 10 lorsque la partie active du module électronique 30 est positionnée dans le logement 14 du patch. La tête de préhension permet à un utilisateur de manipuler le module électronique pour l'insérer et/ou l'extraire du patch. Dans les exemples illustrés, par exemple aux figures 4b et 4d, le module électronique est prévu avec une zone 16 d'antenne, et une zone de composants électronique (autres que l'antenne). Tel qu'illustré, la zone 15 de composants électroniques comporte une épaisseur supérieure à la zone 16 d'antenne, cette dernière étant facilement réalisable avec une épaisseur minimaliste.

Dans les exemples illustrés, la zone mince d'antenne est de préférence prévue avec un profil axial sensiblement conique. La zone 15 de composants est agencée avec un profil axial sensiblement circonférentiel.

Le patch est illustré aux figures 1a et 1b. Il comprend un logement 14 adapté pour permettre de loger la partie active du module électronique 30.

A l'image du module électronique qu'il loge et protège, le patch 10 est configuré selon un profil axial sensiblement allongé avec une embase 12 et un dessus 19 séparés par une paroi latérale 11.

Tel qu'illustré en particulier aux figures 4a et 4c, le patch 10 comporte une ouverture latérale 13 communiquant avec le logement 14. Cette ouverture latérale 13 permet l'insertion et/ou le retrait de la partie active du module électronique 30 dans le logement 14. Cette ouverture 13 est agencée sur la paroi latérale 11, du côté du profil circonférentiel. La surface de l'ouverture 13 est sensiblement inférieure à la surface maximale transversale du module électronique 30 de façon à produire une fermeture avec un léger serrage, suffisant pour rendre la mise en place et la fermeture étanche. L'écart de surface est avantageusement de l'ordre de 10%.

Un orifice latéral 18, visible aux figures 4b et 4d permet une mise en communication fluidique avec la cavité du pneumatique lorsque le patch 10 est mis en place contre la paroi interne du pneumatique.

A l'image du module électronique 30, le patch 10 et le logement 14 de module électronique ont, du côté opposé à l'ouverture latérale 13, un profil axial sensiblement conique. Par ailleurs, du côté de ladite ouverture latérale 13, la patch a un profil axial sensiblement circonférentiel.

Egalement de façon à correspondre à l'architecture du module électronique 30, le logement 14 de module électronique comporte deux zones, soit une zone 16 d'antenne, du côté du profil axial sensiblement conique, et une zone 15 de composants électroniques, du côté du profil axial sensiblement circonférentiel.

La zone 15 de composants électroniques comporte une épaisseur supérieure à la zone 16 d'antenne.

Comme le montre la figure 4d, le logement 14 est situé à une distance « d » de l'embase 12. Une chambre d'air 17 est agencée sous le logement 14. Cette chambre sert par exemple à loger un insert de mousse poreuse, pour protéger les composants électroniques

Pour rendre l'ensemble électronique homogène, et bien protéger le module électronique, la tête de préhension 31 du module électronique 30 est recouverte d'une enveloppe de protection 20 caoutchoutique, tel que montré par exemple aux figures 3a et 3b. Cette enveloppe est prévue pour effectuer une fermeture sensiblement étanche du patch 10 lorsque la partie active du module électronique 30 est logée dans son logement 14.

### SYSTEME ET PROCEDE DE RECHAPAGE

La figure 5 illustre un autre aspect de l'invention, concernant un procédé et un système de rechapage de pneumatiques comportant un ensemble électronique tel que préalablement décrit fixé à une paroi interne d'un pneumatique.

Dans le système prévu, tel qu'illustré à la figure 5, le patch comporte des parois latérales externes 11 inclinées pour former un profil externe en queue d'aronde. Le système comprend également un couvercle 40 de protection du patch 10 caoutchoutique adapté pour recouvrir ledit patch. A l'image des parois externes du patch 10, le couvercle 40 de protection comprend des parois latérales internes 41 inclinées pour former un profil interne en queue d'aronde adapté pour procurer un maintien du couvercle 40 contre le patch 10. Le couvercle peut aisément être mis en place par exemple en le clipsant contre le patch. Pour faciliter son retrait, le couvercle 40 est déformable élastiquement de façon à pouvoir le déclipser du patch. Le couvercle mis en place contre le patch protège ce dernier lors de l'opération de vulcanisation prévue en fin d'un cycle de procédé de rechapage de pneumatique. La vulcanisation de la nouvelle bande de roulement est ainsi effectuée sans risque d'endommager le patch, qui pourrait autrement se fissurer ou former des zones d'amorce de rupture sans une telle protection. A cet effet, le couvercle 40 est avantageusement réalisé en silastène.

Grâce au système de rechapage préalablement décrit, et plus particulièrement grâce au couvercle 40, un procédé de rechapage avantageux peut être mis en œuvre. Cette mise en œuvre prévoit en outre un retrait du module électronique 30 du patch 10 servant de fixation afin d'éviter que cet élément, particulièrement fragile et sensible à la chaleur et à la pression, soit endommagé du fait des conditions extrêmes dues à la phase de vulcanisation. Une nouvelle bande de roulement est appliquée sur le pneumatique. Une éventuelle étape de préparation de la surface de réception de la bande de roulement est avantageusement effectuée, afin d'optimiser la pose et favoriser un maintien durable de la nouvelle bande de roulement. Un couvercle de protection 40 résistant à la vulcanisation est posé contre le patch de façon à recouvrir ce dernier. Cette étape intervient avant la vulcanisation, et éventuellement, avant la pose de la nouvelle bande de roulement. L'étape de vulcanisation du pneumatique avec la nouvelle bande de roulement est ensuite mise en œuvre, le couvercle 40 faisant office de protection du patch. Après démoulage, le couvercle de protection 40 du patch peut être retiré, et le module électronique 30 réinséré dans le patch caoutchoutique 10.

Ce procédé de rechapage permet de mettre en place et vulcaniser une nouvelle bande de roulement sur une carcasse de pneumatique comportant un ensemble électronique tel que préalablement décrit.

### Numéros de référence employés sur les figures

- 1: Ensemble électronique

- 10: Patch caoutchoutique
- 11: Paroi latérale externe du patch (inclinée)
- 12: Embase
- 13: Ouverture
- 14: Logement
- 15: Zone de composants
- 16: Zone d'antenne
- 17: Chambre d'air
- 18: Orifice communiquant
- 19: Dessus du patch

- 20: Enveloppe de protection caoutchoutique

- 30: Module électronique
- 31: Tête de préhension
- 32: Antenne

- 40: Couvercle de protection
- 41: Paroi latérale interne (inclinée et sensiblement correspondante à la paroi externe du patch)

## Revendications

1. Procédé de rechapage pour un pneumatique comprenant un ensemble électronique (1) pourvu d'un module électronique (30), d'un patch caoutchoutique (10) fixé à une paroi interne du pneumatique, ledit patch comportant un logement (14) adapté pour y loger une partie active du module électronique (30), ledit procédé comprenant les étapes suivantes :
- retrait du module électronique (30) du patch (10) servant de fixation ;
- pose d'un couvercle de protection (40) résistant à la vulcanisation contre le patch de façon à recouvrir ce dernier ;
- pose d'une nouvelle bande de roulement sur le pneumatique ;
- vulcanisation du pneumatique avec la nouvelle bande de roulement ;
- retrait du couvercle de protection (40) du patch ;
- réinsertion du module électronique (30) dans le patch caoutchoutique (10).

2. Procédé de rechapage pour pneumatique selon la revendication 1, dans lequel la pose du couvercle de protection contre le patch est effectuée par clipsage dudit élément de protection sur le patch à recouvrir.

3. Système de rechapage pour un pneumatique comprenant un ensemble électronique (1) pourvu d'un module électronique (30), d'un patch caoutchoutique (10) fixé à une paroi interne du pneumatique, ledit patch (10) comportant un logement (14) adapté pour y loger une partie active du module électronique (30), ledit patch comportant des parois latérales externes (11) inclinées pour former un profil externe en queue d'aronde, ledit système comprenant également un couvercle (40) de protection du patch adapté pour recouvrir ledit patch, ledit couvercle comprenant des parois latérales internes (41) inclinées pour former un profil interne en queue d'aronde adapté pour procurer un maintien du couvercle contre le patch.

4. Système de rechapage pour pneumatique selon la revendication 3, dans lequel le couvercle (40) de protection est isolant thermiquement.

5. Système de rechapage pour pneumatique selon l'une quelconque des revendications 3 ou 4, dans lequel le couvercle (40) de protection est réalisé en silastène.

6. Système de rechapage pour pneumatique selon l'une quelconque des revendications revendication 3 à 5, dans lequel le couvercle (40) de protection est clipsable sur le patch (10).

## Patentansprüche

1. Runderneuerungsverfahren für einen Luftreifen, der eine elektronische Einheit (1) enthält, die mit einem elektronischen Modul (30), einem an einer Innenwand des Luftreifens befestigten Kautschukpatch (10) versehen ist, wobei das Patch eine Aufnahme (14) aufweist, die geeignet ist, in ihr einen aktiven Teil des elektronischen Moduls (30) unterzubringen, wobei das Verfahren die folgenden Schritte enthält:
- Entfernen des elektronischen Moduls (30) vom als Befestigung dienenden Patch (10);
- Anbringen eines vulkanisationsbeständigen Schutzdeckels (40) gegen das Patch, um dieses zu bedecken;
- Anbringen eines neuen Laufstreifens auf den Luftreifen;
- Vulkanisation des Luftreifens mit dem neuen Laufstreifen;
- Entfernen des Schutzdeckels (40) vom Patch;
- Wiedereinführen des elektronischen Moduls (30) in das Kautschukpatch (10).

2. Runderneuerungsverfahren für einen Luftreifen nach Anspruch 1, wobei das Anbringen des Schutzdeckels gegen das Patch durch Einrasten des Schutzelements auf dem zu bedeckenden Patch ausgeführt wird.

3. Runderneuerungssystem für einen Luftreifen, der eine elektronische Einheit (1) enthält, die mit einem elektronischen Modul (30), einem an einer Innenwand des Luftreifens befestigten Kautschukpatch (10) versehen ist, wobei das Patch (10) eine Aufnahme (14) aufweist, die geeignet ist, in ihr einen aktiven Teil des elektronischen Moduls (30) unterzubringen, wobei das Patch geneigte äußere Seitenwände (11) aufweist, um ein schwalbenschwanzförmiges äußeres Profil zu formen, wobei das System ebenfalls einen Schutzdeckel (40) des Patchs enthält, der geeignet ist, das Patch zu bedecken, wobei der Deckel geneigte innere Seitenwände (41) enthält, um ein schwalbenschwanzförmiges inneres Profil zu formen, das geeignet ist, einen Halt des Deckels gegen das Patch zu schaffen.

4. Runderneuerungssystem für einen Luftreifen nach Anspruch 3, wobei der Schutzdeckel (40) wärmedämmend ist.

5. Runderneuerungssystem für einen Luftreifen nach einem der Ansprüche 3 oder 4, wobei der Schutzdeckel (40) aus Silastene hergestellt ist.

6. Runderneuerungssystem für einen Luftreifen nach einem der Ansprüche 3 bis 5, wobei der Schutzdeckel (40) auf dem Patch (10) einrastbar ist.

## Claims

1. Retreading method for a tyre comprising an electronic assembly (1) provided with an electronic module (30), a rubber patch (10) fastened to an inner wall of the tyre, said patch including a seat (14) designed to house an active portion of the electronic module (30), said method comprising the following steps:
- removing the electronic module (30) from the patch (10) used for fastening,
- placing a protective cover (40) that is resistant to vulcanization on the patch so as to cover the patch,
- placing a new tread on the tyres,
- vulcanizing the tyre with the new tread,
- removing the protective cover (40) from the patch,
- re-inserting the electronic module (30) into the rubber patch (10).

2. Tyre retreading method according to Claim 1, in which the protective cover is placed on the patch by clipping said protective element onto the patch to be covered.

3. Retreading system for a tyre comprising an electronic assembly (1) provided with an electronic module (30), a rubber patch (10) fastened to an inner wall of the tyre, said patch (10) having a seat (14) designed to house an active portion of the electronic module (30), said patch having outer side walls (11) that are inclined to form an external dovetail profile, said system also including a protective cover (40) for the patch that is designed to cover said patch, said cover having inner side walls (41) that are inclined to form an internal dovetail profile that is designed to hold the cover on the patch.

4. Tyre retreading system according to Claim 3, in which the protective cover (40) is thermally insulating.

5. Tyre retreading system according to either one of Claims 3 and 4, in which the protective cover (40) is made of silastene.

6. Tyre retreading system according to any one of Claims 3 to 5, in which the protective cover (40) can be clipped to the patch (10).
